# EUROPEAN PATENT SPECIFICATION

(11) **EP 1 116 137 B1**
(45) Date of publication and mention of the grant of the patent: **12.11.2003**
(21) Application number: 99943109.1
(22) Date of filing: 03.09.1999
(51) Int. Cl.: G06F 17/30

(54) **DATABASE, AND METHODS OF DATA STORAGE AND RETRIEVAL**
DATENBANK UND ENTSPRECHENDE DATENSPEICHER- UND WIEDERAUFFINDUNGSMETHODEN
BASE DE DONNEES ET METHODES DE MEMORISATION ET D'EXTRACTION DE DONNEES

(30) Priority: 04.09.1998 GB 9819394
(43) Date of publication of application: 18.07.2001
(73) Proprietor: Balaena Limited, London W1M 7RA (GB)
(72) Inventor: PAUL, Calvin, Northborough Peterborough PE6 9BH (GB); MATHER, Andrew, Harvey, Clareville Grove, London SW7 5AT (GB)
(74) Representative: Abnett, Richard Charles
(86) International application number: GB9902905
(87) International publication number: WO00014654

(56) References cited:
- US-A- 5 548 749
- US-A- 5 729 730

## Description

### BACKGROUND OF THE INVENTION

This invention relates to databases, and to the storage and retrieval of data items or records in or from a database.

A Database can in its broadest sense be described as a collection of information organised in a meaningful way. The Telephone Directory is a good example. The names, addresses and telephone numbers are organised into alphabetic order, thus making the task of finding a person's telephone number easy.

The base unit of information stored in a database is a Data Field. In the Telephone Directory example, Name, Address and Telephone Number are examples of Data Fields.

A collection of related Data Fields which are accessed as a unit is called a Data Record. The Data Record will have a value stored for each of its constituent Data Fields. For reference purposes a Data Record is given a name. In the Telephone Directory example, a Data Record called CONTACT would contain the 3 Data Fields NAME, ADDRESS, TELEPHONE_NUMBER.

A collection of Data Records, all of the same type is stored in a Data Table. This is referenced using the same name as the Data Record. Therefore, the Data Table called CONTACT contains Data Records of type CONTACT which consist of the Data Fields NAME, ADDRESS, TELEPHONE_NUMBER.

A Database Management System (DBMS) is a computer program which is used to automate the processes of adding, sorting, removing and displaying the Data Tables, Records and Fields within a database. A DBMS is a common type of program which is available for all computers from the smallest home computer to the largest mainframe computers.

In order to facilitate the rapid retrieval of data from the Data Tables, a DBMS will allow selected Data Fields to be defined as Index Fields. The Data Records can be retrieved in alphabetical order, based on the defined field. This order can usually be defined as either ascending or descending.

In the Telephone directory example, the Data Record CONTACT is defined as comprising three Data Fields called NAME, ADDRESS, TELEPHONE_NUMBER, as noted above. The field NAME may be defined as a string of length 20. The field ADDRESS may be defined as a string of length 128. The field TELEPHONE_NUMBER may be defined as a string of length 20. In order to find names quickly the field NAME may be further defined as an index field which stores the data in ascending order. From these definitions a Data Table called CONTACTS would be created. The only data this database will accept will be for storage and retrieval will be objects of type CONTACT with data members NAME, ADDRESS and TELEPHONE_NUMBER.

If at a later date a POSTCODE field is required as an indexed field, in order to sort the CONTACTS table into geographical order, the database design has to be modified and the data reformatted to the new design. In order to maximise the benefit of a DBMS the reformatting process will be performed by a skilled database analyst.

A known data relationships processor is described in United States Patent US-A-5,604,899. European Patent Application EP-A-0 534 466 describes a change definition language for a computer database system.

### SUMMARY OF THE INVENTION

The invention provides a database for the storage and retrieval of information, without the need of any database design specific to the information being stored or retrieved. That has the result that the entry and retrieval of data is possible subsequent to the initial definition of the database records and fields. New fields can be added relatively easily.

The invention is defined in the independent claims below, to which reference should now be made. Advantageous features of the invention are set forth in the appendant claims.

A preferred embodiment of the invention is described in detail below with reference to the drawings. This preferred embodiment includes five main components, or meta data tables, the first four of which are a Field Declaration Table, a Record/Field Table, a Record Declaration Table, and Record Reference Tables. These contain details about the information being stored. The data items themselves are stored in tables called Field Data Tables. There is one Field Data Table per data field. The information contained in these tables and the manner in which they are processed is described in detail below.

A feature of the system is that each Data Field is declared once and stored uniquely, regardless of how many Data Records contain that field. The Data Values for a Data Field are also stored uniquely.

Although a Data Table is logically cohesive, the physical data storage can be distributed across multiple tables.

It should be noted that no attempt is made to provide an alternative to a DBMS. Rather, the system makes use of existing DBMS technology but removes the definition and design phase of database construction.

Even though the system removes the necessity for the data definition phase of database construction the format and structure of the data being stored must still be recorded. This is because in the preferred embodiment the data is converted for storage. It may be converted into Strings. To avoid field overflows an arbitrary length, such as 255 characters, may be used for the strings.

### BRIEF DESCRIPTION OF THE DRAWINGS

The invention will be described in more detail, by way of example, with reference to the accompanying drawings, in which:
**Figure 1** is a schematic diagram illustrating the storage components of a preferred database embodying the invention;
**Figure 2** is a diagram based on Figure 1 for an exemplary database in the form of a contacts directory;
**Figure 3** is a flowchart illustrating the operation of adding a single data item to the database;
**Figure 4** is a flowchart illustrating the operation of adding a list of data items to the database;
**Figure 5** is a flowchart illustrating the operation of adding a data record to the database;
**Figure 6** is a flowchart illustrating the operation of retrieving a list of data items from the database; and
**Figure 7** is a flowchart illustrating the operation of retrieving data records from the database.

### DETAILED DESCRIPTION OF THE PREFERRED EMBODIMENT

The preferred database structure to be described is defined by a computer program which may be stored in any conventional medium, eg disc or ROM, and may be downloaded on-line from a server to a customer. The database will be described in the form it takes when it is running on a computer.

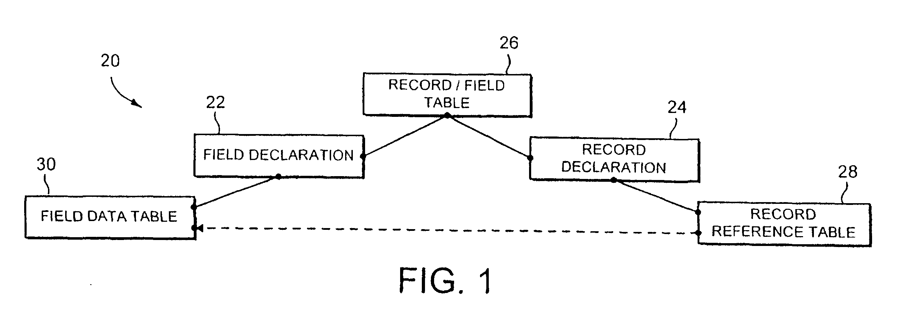

The main storage components of the preferred database 20 embodying the invention are shown in diagrammatic form in Figure 1. These comprise a Field Declaration Table 22, a Record Declaration Table 24, a Record/Field Table 26, Record Reference Tables 28, and Field Data Tables 30. The database allows the data types, as defined in the Field Declaration Table 22, to be viewed or operated on in the form of a plurality of record types, as defined in the Record Declaration Table 24. The data items which make up each record type are defined in the Record/Field Table 26. The Record Reference Tables 28 provide access to the data items without the need for duplicate storage of data. The properties of these tables 22-30 will now be described individually in more detail.

### FIELD DECLARATION TABLE 22

Each Field Declaration Record of the Field Declaration Table 22 contains the descriptive information for a Data Field, and thus defines the allowable Data Fields. It stores the Data Field name, the data type (eg. String, Integer, Float etc.) and the name of the Field Data Table which is used to store the data values. The Field Declaration Record also contains a unique reference ID (identification) for internal use which is generated for each Field Declaration entered. In fact, the field name and the field data table name can be the same, and one field could be used for both.

| **Field** | **Data Type** | **Usage** |
|---|---|---|
| FldID | Long | Unique Reference ID |
| FldName | String length 50 | Name of Field |
| FldType | String length 20 | Field Data Type (eg. Long, Float, Text etc.) |
| FldDataTbl | String length 50 | This stores the name of the Field Data Table for this field. |

### RECORD DECLARATION TABLE 24

Each Record Declaration Record of the Record Declaration Table 24 contains the details about a Record, and thus defines the allowable record types. It contains the name for a Data Record, and the name of the corresponding Record Reference Table. It also contains a unique reference ID for internal use which is generated for each Record Declaration entered. In fact, the record name and the record reference table name can be the same, and one field could be used for both.

| **Field** | **Data Type** | **Usage** |
|---|---|---|
| RecID | Long | Unique Reference ID |
| RecName | String length 50 | Name of Record |
| RecTblName | String length 10 | Name of Record Reference Table |

### RECORD/FIELD TABLE 26

The Record/Field Table associates the Record Declaration Record with the Field Declaration Records by storing their unique reference IDs. It thus defines the data fields which go to make up each of the allowable record types. It may also contain a unique reference ID for internal use. The Record/Field Table defines for each Record Reference Table (see below) what data fields it contains, in this example by storing the unique reference IDs as linked pairs.

| **Field** | **Data Type** | **Usage** |
|---|---|---|
| RecFldID | Long | Unique Reference ID |
| RecID | Long | Record Declaration ID |
| FldID | Long | Field Declaration ID |

### RECORD REFERENCE TABLES 28

These are tables which are generated whenever a Record Declaration Record is added to the system. There is a Record Reference Table for each Record Reference Table identified in the Record Declaration Table 24. The Record Reference Table consists of a column for each Field Declaration associated with the Table Declaration in the Record/Fields Table. Each column stores the data item references to data items stored in the corresponding Field Data Table, see below. Each row in the table, therefore, will store the references required to retrieve a complete instance of a Data Record, so there is one row per Data Record. The table also contains a column used to store a unique reference ID for internal uses.

| **Field** | **Data Type** | **Usage** |
|---|---|---|
| ID | Long | Unique Reference ID |
| DataField_1 | Long | Reference to Data in Field Data Table for DataField_1 |
| DataField_2 | Long | Reference to Data in Field Data Table for DataField_2 |
| | | One column is added for each field associated with this record. |

### FIELD DATA TABLES 30

Field Data Tables are used to store data items. There is a Field Data Table for each Data Field name held in the Field Declaration Table 22. Each data item is assigned a unique data item reference number which is stored in the Record Reference Table instead of the data item itself. A new Field Data Table is created for each Field Declaration added.

| **Field** | **Data Type** | **Usage** |
|---|---|---|
| ID | Long | Unique Reference ID |
| Name | String length 255 | Stored Data |

There is thus a record reference table for each record reference table identified in the record declaration table, and each record reference table contains, for each data field associated with that record reference table in the record/field table, data item references corresponding to data items stored in the field data tables.

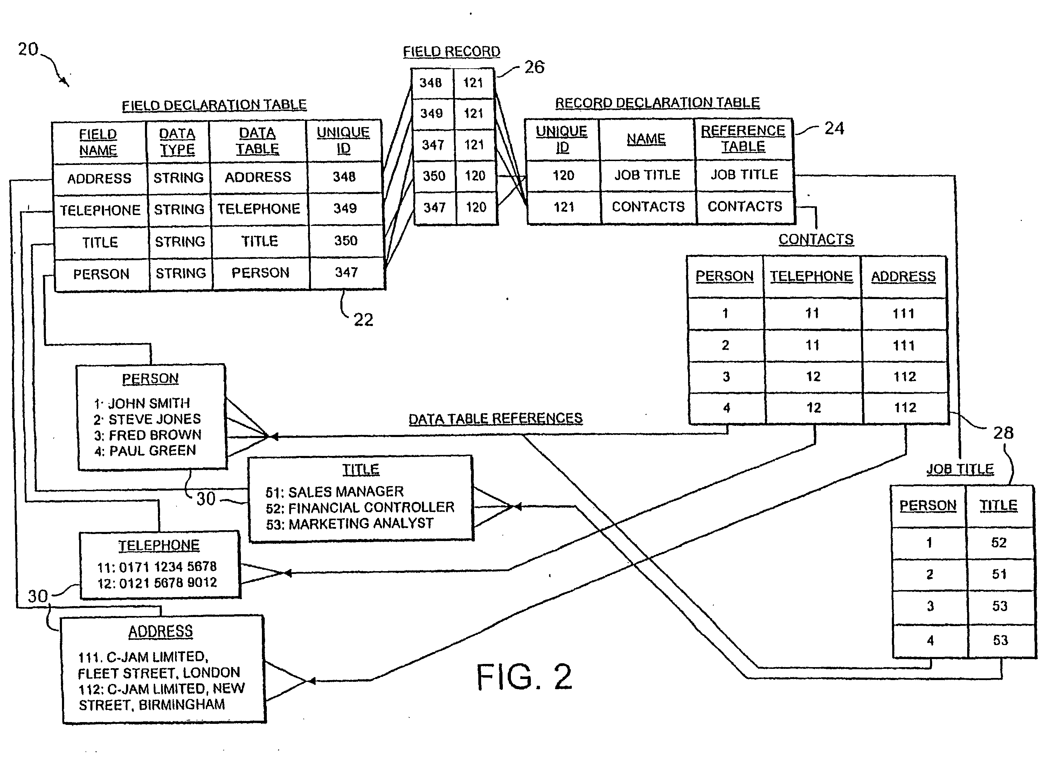

### FIGURE 2 EMBODIMENT

A detailed example forming the preferred embodiment of the invention will now be described with reference to Figure 2 of the drawings. This Figure is set out so as to show its correspondence with the storage components of Figure 1. The example is of a contact list or telephone directory.

In this example, the Field Declaration Table 22 contains the descriptive information for four possible types of Data Field, namely Address, Telephone (number), Title, and Person (name). For each Data Field, the Field Declaration Table holds the field name, the data type, the name of the field data table 30 (which is essentially the same as the field name) and the unique reference ID.

The Record Declaration Table 24 of Figure 2 contains the name for two possible data records, namely JobTitle and Contacts, and the names of the corresponding Record Reference Tables 28.

The Record/Field (or Field Record) Table 26 of Figure 2 links the unique ID of the Field Declaration Table 22 with the associated unique ID of the Record Declaration Table 24, thereby associating a Record Declaration Record with a corresponding Field Declaration Record. In this case the data record JobTitle is linked to the Field name Person and the Field name Title, and the data record Contacts is linked with the Field names, Address, Telephone and Person. In this way the data types which go to make up each record type are defined.

There are two Record Reference Tables 28 in Figure 2, namely a JobTitle Table and a Contacts Table, corresponding respectively to the two allowable record types defined in the Record Declaration Table. These Record Reference tables include unique IDs of different data fields, whereby for each person there is a linked telephone and address, and for each person there is a linked job title.

Finally, there are in Figure 2 four field data tables 30, for person, title, telephone and address respectively. Each data item is assigned a unique reference number, which is used in the record reference tables 28.

It should be noted that each data field is declared once only and stored uniquely, regardless of how many data records contain that field. In this example, both the Contact and JobTitle Data Records contain the Data Field 'Person'. The data values for a data item are also stored uniquely.

### THE DATA REPOSITORY

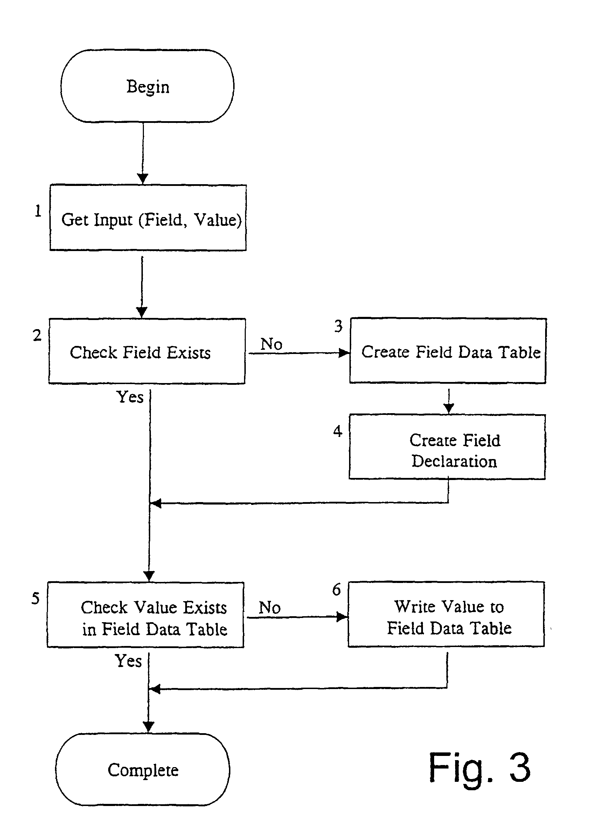

The current embodiment of the system is in a Data Repository which is used to store data items entered as single items, as a list of items or as data structures. The Data Repository is used to store data from unspecified sources and in unspecified structures, of which it has no prior knowledge. Therefore, a mechanism for storing and retrieving the data is required. The following description should be read in conjunction with the flowcharts of Figures 3 to 7.

### STORAGE

The available storage mechanisms contained within the current embodiment of the system are storage of a single item, storage of a list of data items and the storage of a data record. The system is not confined to these mechanisms and allows others to be implemented if desired.

### STORAGE OF A SINGLE DATA ITEM

When adding a single data item the user must supply two parameters. The first is a generic name for the data item, and the second is the data item itself. For example, CompanyName and C-JAM Limited.

Referring to Figure 3, having received the storage request, Step 1 the database is searched to determine if a Field Declaration Record already exists for the Field, Step 2. In the CompanyName example if the Field Declaration Record does not exist then neither will a Field Data Table. This is created, Step 3, and a Field Declaration Record is then created containing the name of the Field Data Table, Step 4. The Field Data Table is then searched to find the data item, Step 5. If it is not found it is added to the table, Step 6. The process is then complete.

### STORAGE OF A LIST OF DATA ITEMS

When adding a list of data items the user must again supply two parameters. The first is a generic name for the data items, and the second is the list of data items. For example, CompanyName and C-JAM Limited, British Telecom, British Airways.

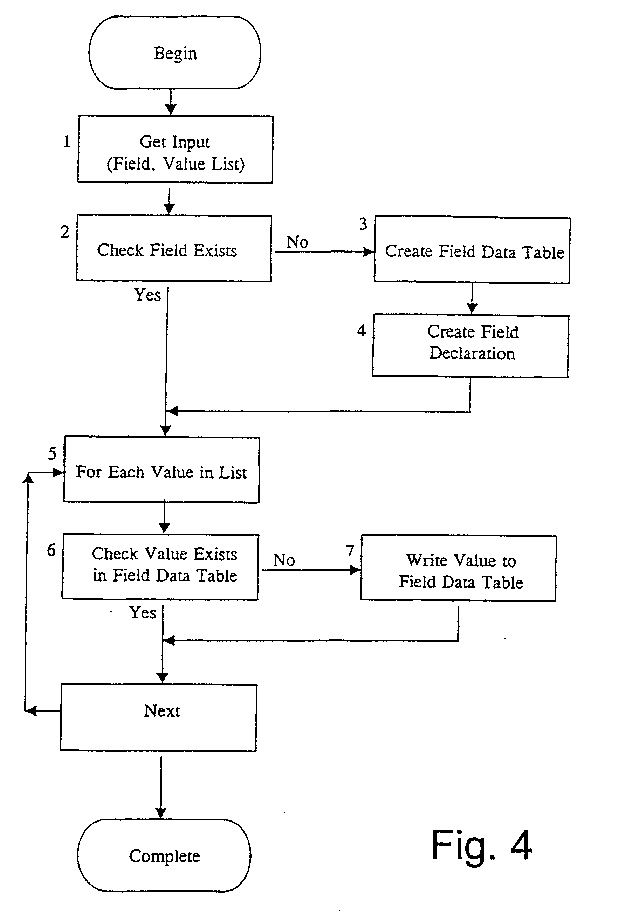

Referring to Figure 4, having received the storage request, Step 1, the database is searched to determine if a Field Declaration Record already exists for the Field, Step 2. In the CompanyName example, if the Field Declaration Record does not exist then neither will a Field Data Table. This is created, Step 3, and a Field Declaration Record is then created containing the name of the Field Data Table, Step 4. For each item in the list in turn, Step 5, the Field Data Table is the searched to find the data item, Step 6. If it is not found it is added to the file, Step 7. This is repeated until the storage of the list is complete.

### STORAGE OF A DATA RECORD

When storing a data record or structure also the user must supply two parameters. The first is a generic name for the structure, and the second is a list of field names and data items. For example, COMPANY; CompanyName, C-JAM Limited; CompanyAddress, Fleet Street; CompanyTelephone, 0171 1234 5678.

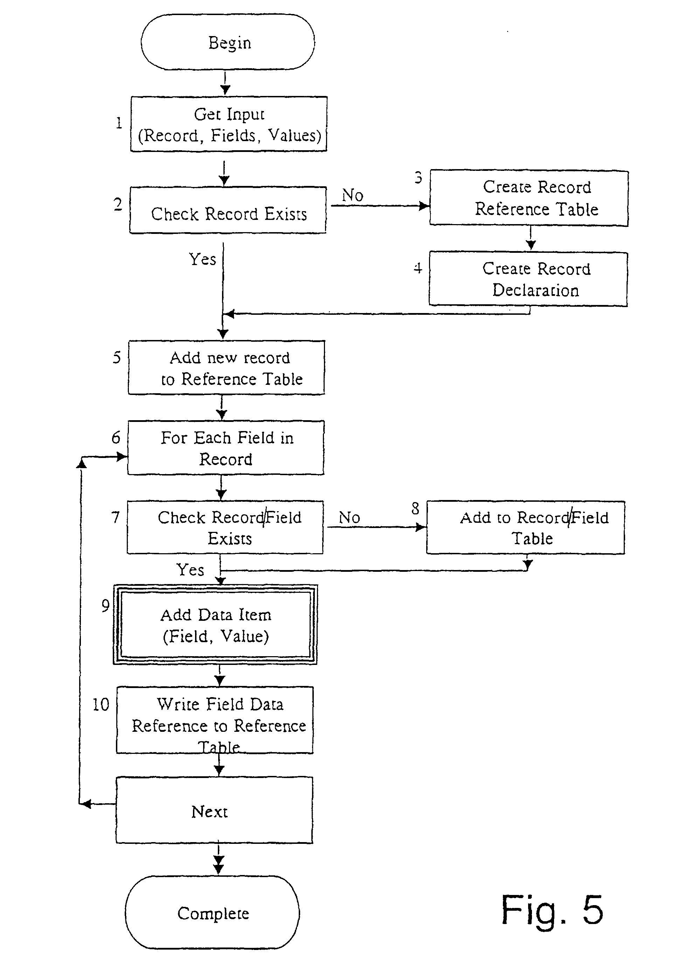

Referring to Figure 5, having received the storage request, Step 1 the database is searched to determine if a Record Declaration Record (COMPANY) already exists for the record, Step 2. If there is no Record Declaration Record found then a Record Reference Table will not exist either, so one of the latter is created, Step 3, and its name is stored in the Record Declaration Record which is then created, Step 4. A new record is created in the Record Reference Table, Step 5. For each field name in turn, Step 6, the Record/Field table is checked, Step 7, and if the field is not associated with the record an entry is made in the table, Step 8. This is followed by the process to store a data item, Step 9, following the routine of Figure 3. Finally the Field Data reference for the field is found, by searching the Field Data Table for the item, and the reference is added to the Record Reference Table, Step 10. This is repeated until the storage of the Data Record is complete.

### RETRIEVAL

The available retrieval mechanisms contained within the current preferred embodiment of the system are retrieval of a list of data fields and retrieval of a list of data records. The system need not be confined to these mechanisms and others may be implemented.

### RETRIEVAL OF A LIST OF DATA ITEMS

When retrieving a list of data items or fields the user must supply one parameter, the name of the data items being retrieved, for example, CompanyName.

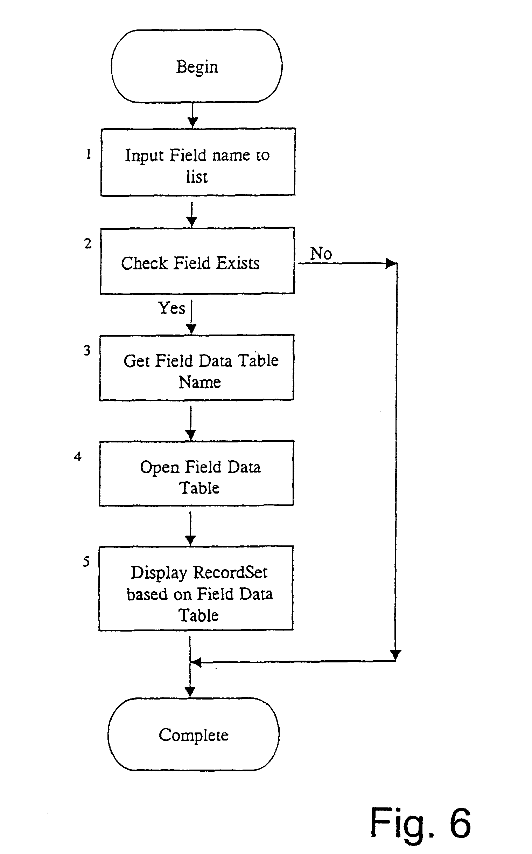

Referring to Figure 6, having received the retrieval request, Step 1 the database is searched to determine if a Field Declaration Record exists for the required Field, Step 2, which in the present example is CompanyName. If the Field Declaration Record does not exist then no further action is taken. If it does exist the Field Data Table name is read from the Field Declaration Record, Step 3, and the table is opened, Step 4. A recordset is created based on the table, Step 5, and its contents can them be displayed or acted upon like any other recordset.

### RETRIEVAL OF A LIST OF DATA RECORDS

When retrieving a list of data records the user must supply one parameter, the name of the record being retrieved, for example, COMPANY.

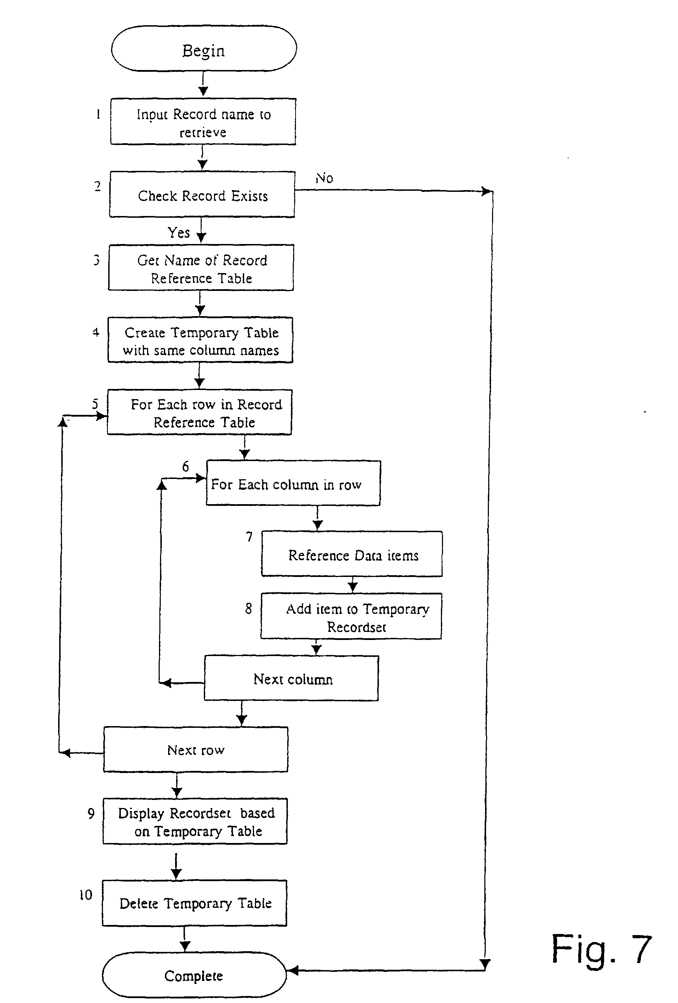

Referring to Figure 7, having received the retrieval request, Step 1 the database is searched to determine if a Record Declaration Record exists for the required record, Step 2, in the present example COMPANY. If the Record Declaration Record does not exist then no further action is taken. If it does exist the Record Reference Table name is read from the Record Declaration Record, Step 3, and the table is opened. A temporary table with the same columns as the Record Reference Table is created, Step 4. Each row in the Record Reference Table is read sequentially, Step 5, and within each row the columns are accessed one by one, Step 6. The reference number is read from the column and the data item is located, Step 7, by finding the Field Declaration Record for the column, opening the Field Data Table and finding the data item that corresponds to the reference number. This item is then added to the temporary table in the correct row and column, Step 8. When all the columns have been accessed the process is performed on the next row until the entire Record Reference Table has been processed and a temporary table exists containing then data items. The temporary table is opened and a recordset is created based on it, Step 9. Its contents can then be displayed or acted upon like any other recordset. When the recordset is closed by the user the temporary table is deleted, Step 10. The process is then complete.

It will thus be seen that the database which has been described and illustrated consists of a field declaration table defining data field types, a record declaration table defining data record types, a record/field table defining which record reference table contains which data fields, a plurality of field data tables, one for each data field type identified in the field declaration table, and a plurality of record reference tables, one for each data record identified in the record declaration table. Duplication of stored data is avoided, and additions of new fields to the database are easily accomplished. Information can be stored and retrieved easily even subsequently to the initial definition of the database records and fields.

## Claims

1. A database structure stored in a computer memory and comprising a plurality of tables including a field declaration table (22), a record declaration table (24), a record/field table (26), a plurality of field data tables (30), and a plurality of record reference tables (28); wherein:
(a) the field declaration table (22) defines allowable data fields and contains a plurality of data field names and the name of a field data table for each data field name, and a first unique identification for each data field name;
(b) the record declaration table (24) defines allowable record types and contains the name of a plurality of data records and the name of a record reference table for each record type, and a second unique identification for each record type;
(c) the record/field table (26) contains associated first and second unique identifications so as to define which record reference table and therefore which record type contains which data fields;
(d) there is a field data table (30) for each data field name identified in the field declaration table, and each field data table contains, for each data item stored in the field data table, a data item reference; and
(e) there is a record reference table (28) for each record reference table identified in the record declaration table, and each record reference table contains, for each data field associated with that record reference table in the record/field table, data item references corresponding to data items stored in the field data tables.

2. A database structure according to claim 1, in which the field declaration table (22) additionally includes, for each data field name, a data type indication.

3. A database structure according to claim 1 or 2, in which the record/field table (26) contains associated pairs of first and second unique identifications.

4. A method of storing a data item in a database, the database comprising:
(a) a field declaration table (22) which defines allowable data fields and contains a plurality of data field names and the name of a field data table for each data field name, and a first unique identification for each data field name;
(b) a record declaration table (24) which defines allowable record types and contains the name of a plurality of data records and the name of a record reference table for each record type, and a second unique identification for each record type;
(c) a record/field table (26) which contains associated first and second unique identifications so as to define which record reference table and therefore which record type contains which data fields;
(d) a field data table (30) for each data field name identified in the field declaration table, and each field data table contains, for each data item stored in the field data table, a data item reference; and
(e) a record reference table (28) for each record reference table identified in the record declaration table, and each record reference table contains, for each data field associated with that record reference table in the record/field table, data item references corresponding to data items stored in the field data tables; and the method comprising the steps of:
receiving a data item and a generic name for the data item to be stored;
searching the database to determine if a field declaration record exists corresponding to the generic name for the data item;
if such a field declaration record exists, searching the field data table to find the data item; and
storing the data item.

5. A method according to claim 4, in which if the data item is not found in the field data table, the method further comprises the step of writing the data item to the field data table.

6. A method according to claim 4 or 5, in which if a field declaration record is not found, the method further comprises the step of creating a field data table and a field declaration record therefor.

7. A method according to claim 4, 5 or 6 for storing a list of data items, in which the field data table is searched for each item in the list.

8. A method of retrieving a list of data items from a database, the database comprising:
(a) a field declaration table (22) which defines allowable data fields and contains a plurality of data field names and the name of a field data table for each data field name, and a first unique identification for each data field name;
(b) a record declaration table (24) which defines allowable record types and contains the name of a plurality of data records and the name of a record reference table for each record type, and a second unique identification for each record type;
(c) a record/field table (26) which contains associated first and second unique identifications so as to define which record reference table and therefore which record type contains which data fields;
(d) a field data table (30) for each data field name identified in the field declaration table, and each field data table contains, for each data item stored in the field data table, a data item reference; and
(e) a record reference table (28) for each record reference table identified in the record declaration table, and each record reference table contains, for each data field associated with that record reference table in the record/field table, data item references corresponding to data items stored in the field data tables; and the method comprising the steps of:
receiving a name for the data items to be retrieved;
searching the database to determine if a field declaration record exists corresponding to the name for the data items;
if such a field declaration record exists, reading the field declaration table to find the field data table;
opening the field data table; and
retrieving the data items from the field data table.

9. A method of storing a data record in a database, the database comprising:
(a) a field declaration table (22) which defines allowable data fields and contains a plurality of data field names and the name of a field data table for each data field name, and a first unique identification for each data field name;
(b) a record declaration table (24) which defines allowable record types and contains the name of a plurality of data records and the name of a record reference table for each record type, and a second unique identification for each record type;
(c) a record/field table (26) which contains associated first and second unique identifications so as to define which record reference table and therefore which record type contains which data fields;
(d) a field data table (30) for each data field name identified in the field declaration table, and each field data table contains, for each data item stored in the field data table, a data item reference; and
(e) a record reference table (28) for each record reference table identified in the record declaration table, and each record reference table contains, for each data field associated with that record reference table in the record/field table, data item references corresponding to data items stored in the field data tables; and the method comprising the steps of:
receiving a data record containing a generic name and a list of field names and data items;
searching the database to determine if a record declaration record exists for the record;
if such a record declaration record exists, for each field name searching the record/field table to find the fields associated with the data record; and
storing the data record in the field data tables corresponding to the found fields, and storing the data item references corresponding to the stored data items in the record reference table identified in the existing record declaration record.

10. A method of retrieving a list of data records from a database, the database comprising:
(a) a field declaration table (22) which defines allowable data fields and contains a plurality of data field names and the name of a field data table for each data field name, and a first unique identification for each data field name;
(b) a record declaration table (24) which defines allowable record types and contains the name of a plurality of data records and the name of a record reference table for each record type, and a second unique identification for each record type;
(c) a record/field table (26) which contains associated first and second unique identifications so as to define which record reference table and therefore which record type contains which data fields;
(d) a field data table (30) for each data field name identified in the field declaration table, and each field data table contains, for each data item stored in the field data table, a data item reference; and
(e) a record reference table (28) for each record reference table identified in the record declaration table, and each record reference table contains, for each data field associated with that record reference table in the record/field table, data item references corresponding to data items stored in the field data tables; and the method comprising the steps of:
receiving a name for the data records to be retrieved;
searching the database to determine if a record declaration record exists corresponding to the name;
if such a record declaration record exists, reading the record declaration table to find the record reference table;
opening the record reference table; and
retrieving the data records.

11. A computer program product directly loadable into the internal memory of a digital computer, and comprising software code portions for performing the steps of claim 4 when the product is run on a computer.

12. A computer program product directly loadable into the internal memory of a digital computer, and comprising software code portions for performing the steps of claim 8 when the product is run on a computer.

13. A computer program product directly loadable into the internal memory of a digital computer, and comprising software code portions for performing the steps of claim 9 when the product is run on a computer.

14. A computer program product directly loadable into the internal memory of a digital computer, and comprising software code portions for performing the steps of claim 10 when the product is run on a computer.

15. A computer program product directly loadable into the internal memory of a digital computer, and comprising software code portions for defining a database structure in accordance with claim 1 when the product is run on a computer.

## Patentansprüche

1. Datenbankstruktur, die in einem Computerspeicher gespeichert ist und eine Mehrzahl von Tabellen umfasst, einschließlich einer Felddeklarationstabelle (22), einer Datensatzdeklarationstabelle (24), einer Datensatz-/-feldtabelle (26), einer Mehrzahl von Felddatentabellen (30) und einer Mehrzahl von Datensatzreferenztabellen (28), wobei:
(a) die Felddeklarationstabelle (22) zulässige Datenfelder definiert und eine Mehrzahl von Datenfeldnamen und den Namen einer Felddatentabelle für jeden Datenfeldnamen sowie eine erste eindeutige Identifikation für jeden Datenfeldnamen definiert;
(b) die Datensatzdeklarationstabelle (24) zulässige Datensatztypen definiert und den Namen einer Mehrzahl von Datensätzen und den Namen einer Datensatzreferenztabelle für jeden Datensatztyp sowie eine zweite eindeutige Identifikation für jeden Datensatztyp definiert;
(c) die Datensatz-/-feldtabelle (26) assoziierte erste und zweite eindeutige Identifikationen enthält, um zu definieren, welche Datensatzreferenztabelle und somit welcher Datensatztyp welche Datenfelder enthält;
(d) eine Felddatentabelle (30) für jeden in der Felddeklarationstabelle identifizierten Datenfeldnamen vorhanden ist, und wobei jede Felddatentabelle für jedes in der Felddatentabelle gespeicherte Datenwort eine Datenwortreferenz enthält; und
(e) eine Datensatzreferenztabelle (28) für jede in der Datensatzdeklarationstabelle identifizierte Datensatzreferenztabelle vorhanden ist, und jede Datensatzreferenztabelle für jedes mit dieser Datensatzreferenztabelle in der Datensatz-/-feldtabelle assoziierte Datenfeld Datenwortreferenzen enthält, die in den Felddatentabellen gespeicherten Datenworten entsprechen.

2. Datenbankstruktur nach Anspruch 1, bei der die Felddeklarationstabelle (22) zusätzlich für jeden Datenfeldnamen eine Datentypanzeige beinhaltet.

3. Datenbankstruktur nach Anspruch 1 oder 2, bei der die Datensatz-/-feldtabelle (26) assoziierte Paare von ersten und zweiten eindeutigen Identifikationen enthält.

4. Verfahren zum Speichern eines Datenwortes in einer Datenbank, wobei die Datenbank Folgendes umfasst:
(a) eine Felddeklarationstabelle (22), die zulässige Datenfelder definiert und eine Mehrzahl von Datenfeldnamen und den Namen einer Felddatentabelle für jeden Datenfeldnamen sowie eine erste eindeutige Identifikation für jeden Datenfeldnamen enthält;
(b) eine Datensatzdeklarationstabelle (24), die zulässige Datensatztypen definiert und den Namen einer Mehrzahl von Datensätzen und den Namen einer Datensatzreferenztabelle für jeden Datensatztyp sowie eine zweite eindeutige Identifikation für jeden Datensatztyp enthält;
(c) eine Datensatz-/-feldtabelle (26), die assoziierte erste und zweite eindeutige Identifikationen enthält, um zu definieren, welche Datensatzreferenztabelle und somit welcher Datensatztyp welche Datenfelder enthält;
(d) eine Felddatentabelle (30) für jeden in der Felddeklarationstabelle identifizierten Datenfeldnamen, und jede Felddatentabelle enthält für jedes in der Felddatentabelle gespeicherte Datenwort eine Datenwortreferenz; und
(e) eine Datensatzreferenztabelle (28) für jede in der Datensatzdeklarationstabelle identifizierte Datensatzreferenztabelle, und jede Datensatzreferenztabelle enthält für jedes mit dieser Datensatzreferenztabelle in der Datensatz-/-feldtabelle assoziierte Datenfeld Datenwortreferenzen, die in den Felddatentabellen gespeicherten Datenworten entsprechen, und wobei das Verfahren die folgenden Schritte umfasst:
Empfangen eines Datenwortes und eines generischen Namens für das zu speichernde Datenwort;
Durchsuchen der Datenbank, um zu ermitteln, ob ein Felddeklarationsdatensatz existiert, der dem generischen Namen für das Datenwort entspricht;
und wenn ein solcher Felddeklarationsdatensatz existiert, Durchsuchen der Felddatentabelle, um das Datenwort zu finden; und
Speichern des Datenwortes.

5. Verfahren nach Anspruch 4, bei dem dann, wenn das Datenwort nicht in der Felddatentabelle gefunden wird, das Verfahren ferner den Schritt des Schreibens des Datenwortes in die Felddatentabelle umfasst.

6. Verfahren nach Anspruch 4 oder 5, bei dem dann, wenn kein Felddeklarationsdatensatz gefunden wird, das Verfahren ferner den Schritt des Erzeugens einer Felddatentabelle und eines Felddeklarationsdatensatzes dafür umfasst.

7. Verfahren nach Anspruch 4, 5 oder 6 zum Speichern einer Liste von Datenworten, wobei die Felddatentabelle nach jedem Wort in der Liste durchsucht wird.

8. Verfahren zum Abrufen einer Liste von Datenworten aus einer Datenbank, wobei die Datenbank Folgendes umfasst:
(a) eine Felddeklarationstabelle (22), die zulässige Datenfelder definiert und eine Mehrzahl von Datenfeldnamen und den Namen einer Felddatentabelle für jeden Datenfeldnamen sowie eine erste eindeutige Identifikation für jeden Datenfeldnamen enthält;
(b) eine Datensatzdeklarationstabelle (24), die zulässige Datensatztypen definiert und den Namen einer Mehrzahl von Datensätzen und den Namen einer Datensatzreferenztabelle für jeden Datensatztyp sowie eine zweite eindeutige Identifikation für jeden Datensatztyp enthält;
(c) eine Datensatz-/-feldtabelle (26), die assoziierte erste und zweite eindeutige Identifikationen enthält, um zu definieren, welche Datensatzreferenztabelle und somit welcher Datensatztyp welche Datenfelder enthält;
(d) eine Felddatentabelle (30) für jeden in der Felddeklarationstabelle identifizierten Datenfeldnamen, und jede Felddatentabelle enthält für jedes in der Felddatentabelle gespeicherte Datenwort eine Datenwortreferenz; und
(e) eine Datensatzreferenztabelle (28) für jede in der Datensatzdeklarationstabelle identifizierte Datensatzreferenztabelle, und jede Datensatzreferenztabelle enthält für jedes mit dieser Datensatzreferenztabelle in der Datensatz-/-feldtabelle assoziierte Datenfeld Datenwortreferenzen, die in den Felddatentabellen gespeicherten Datenworten entsprechen,
und wobei das Verfahren die folgenden Schritte umfasst:
Empfangen eines Namens für die abzurufenden Datenworte;
Durchsuchen der Datenbank, um zu ermitteln, ob ein Felddeklarationsdatensatz existiert, der dem Namen für die Datenworte entspricht;
und wenn ein solcher Felddeklarationsdatensatz existert, Lesen der Felddeklarationstabelle, um die Felddatentabelle zu finden;
Öffnen der Felddatentabelle; und
Abrufen der Datenworte aus der Felddatentabelle.

9. Verfahren zum Speichern eines Datensatzes in einer Datenbank, wobei die Datenbank Folgendes umfasst:
(a) eine Felddeklarationstabelle (22), die zulässige Datenfelder definiert und eine Mehrzahl von Datenfeldnamen und den Namen einer Felddatentabelle für jeden Datenfeldnamen sowie eine erste eindeutige Identifikation für jeden Datenfeldnamen enthält;
(b) eine Datensatzdeklarationstabelle (24), die zulässige Datensatztypen definiert und den Namen einer Mehrzahl von Datensätzen und den Namen einer Datensatzreferenztabelle für jeden Datensatztyp sowie eine zweite eindeutige Identifikation für jeden Datensatztyp enthält;
(c) eine Datensatz-/-feldtabelle (26), die assoziierte erste und zweite eindeutige Identifikationen enthält, um zu definieren, welche Datensatzreferenztabelle und somit welcher Datensatztyp welche Datenfelder enthält;
(d) eine Felddatentabelle (30) für jeden in der Felddeklarationstabelle identifizierten Datenfeldnamen, und jede Felddatentabelle enthält für jedes in der Felddatentabelle gespeicherte Datenwort eine Datenwortreferenz; und
(e) eine Datensatzreferenztabelle (28) für jede in der Datensatzdeklarationstabelle identifizierte Datensatzreferenztabelle, und jede Datensatzreferenztabelle enthält für jedes mit dieser Datensatzreferenztabelle in der Datensatz-/-feldtabelle assoziierte Datenfeld Datenwortreferenzen, die in den Felddatentabellen gespeicherten Datenworten entsprechen,
und wobei das Verfahren die folgenden Schritte umfasst:
Empfangen eines Datensatzes, der einen generischen Namen und eine Liste von Feldnamen und Datenworten enthält;
Durchsuchen der Datenbank, um zu ermitteln, ob ein Datensatzdeklarationsdatensatz für den Datensatz existiert;
und wenn ein solcher Datensatzdeklarationsdatensatz existiert, für jeden Feldnamen Durchsuchen der Datensatz-/-feldtabelle, um die mit dem Datensatz assoziierten Felder zu finden; und
Speichern des Datensatzes in den Felddatentabellen, die den gefundenen Feldern entsprechen, und Speichern der Datenwortreferenzen, die den gespeicherten Datenworten in der im existierenden Datensatzdeklarationsdatensatz identifizierten Datensatzreferenztabelle entsprechen.

10. Verfahren zum Abrufen einer Liste von Datensätzen aus einer Datenbank, wobei die Datenbank Folgendes umfasst:
(a) eine Felddeklarationstabelle (22), die zulässige Datenfelder definiert und eine Mehrzahl von Datenfeldnamen und den Namen einer Felddatentabelle für jeden Datenfeldnamen sowie eine erste eindeutige Identifikation für jeden Datenfeldnamen enthält;
(b) eine Datensatzdeklarationstabelle (24), die zulässige Datensatztypen definiert und den Namen einer Mehrzahl von Datensätzen und den Namen einer Datensatzreferenztabelle für jeden Datensatztyp sowie eine zweite eindeutige Identifikation für jeden Datensatztyp enthält;
(c) eine Datensatz-/-feldtabelle (26), die assoziierte erste und zweite eindeutige Identifikationen enthält, um zu definieren, welche Datensatzreferenztabelle und somit welcher Datensatztyp welche Datenfelder enthält;
(d) eine Felddatentabelle (30) für jeden in der Felddeklarationstabelle identifizierten Datenfeldnamen, und jede Felddatentabelle enthält für jedes in der Felddatentabelle gespeicherte Datenwort eine Datenwortreferenz; und
(e) eine Datensatzreferenztabelle (28) für jede in der Datensatzdeklarationstabelle identifizierte Datensatzreferenztabelle, und jede Datensatzreferenztabelle enthält für jedes mit dieser Datensatzreferenztabelle in der Datensatz-/-feldtabelle assoziierte Datenfeld Datenwortreferenzen, die in den Felddatentabellen gespeicherten Datenworten entsprechen
und wobei das Verfahren die folgenden Schritte umfasst:
Empfangen eines Namens für die abzurufenden Datensätze;
Durchsuchen der Datenbank, um zu ermitteln, ob ein Datensatzdeklarationsdatensatz existiert, der dem Namen entspricht;
und wenn ein solcher Datensatzdeklarationsdatensatz existiert, Lesen der Datensatzdeklarationstabelle, um die Datensatzreferenztabelle zu finden;
Öffnen der Datensatzreferenztabelle; und
Abrufen der Datensätze.

11. Computerprogrammprodukt, das direkt in den internen Speicher eines digitalen Computers geladen werden kann und das Software-Codeteile zum Durchführen der Schritte von Anspruch 4 umfasst, wenn das Produkt auf einem Computer läuft.

12. Computerprogrammprodukt, das direkt in den internen Speicher eines digitalen Computers geladen werden kann und das Software-Codeteile zum Durchführen der Schritte von Anspruch 8 umfasst, wenn das Produkt auf einem Computer läuft.

13. Computerprogrammprodukt, das direkt in den internen Speicher eines digitalen Computers geladen werden kann und das Software-Codeteile zum Durchführen der Schritte von Anspruch 9 umfasst, wenn das Produkt auf einem Computer läuft.

14. Computerprogrammprodukt, das direkt in den internen Speicher eines digitalen Computers geladen werden kann und das Software-Codeteile zum Durchführen der Schritte von Anspruch 10 umfasst, wenn das Produkt auf einem Computer läuft.

15. Computerprogrammprodukt, das direkt in den internen Speicher eines digitalen Computers geladen werden kann und das Software-Codeteile zum Definieren einer Datenbankstruktur gemäß Anspruch 1 umfasst, wenn das Produkt auf einem Computer läuft.

## Revendications

1. Structure de base de données mémorisée dans une mémoire d'ordinateur et comprenant une pluralité de tables comportant une table de déclarations de champs (22), une table de déclarations d'enregistrements (24), une table d'enregistrements/champs (26), une pluralité de tables de données de champs (30), et une pluralité de tables de références d'enregistrements (28) ; dans laquelle :
(a) la table de déclarations de champs (22) définit des champs de données admissibles et contient une pluralité de noms de champs de données et le nom d'une table de données de champs pour chaque nom de champ de données, et une première identification unique pour chaque nom de champ de données ;
(b) la table de déclarations d'enregistrements (24) définit des types d'enregistrements admissibles et contient le nom d'une pluralité d'enregistrements de données et le nom d'une table de références d'enregistrements pour chaque type d'enregistrement, et une deuxième identification unique pour chaque type d'enregistrement ;
(c) la table d'enregistrements/champs (26) contient des première et deuxième identifications uniques associées de manière à définir quelle table de références d'enregistrements et donc quel type d'enregistrement contient quels champs de données ;
(d) il existe une table de données de champs (30) pour chaque nom de champ de données identifié dans la table de déclarations de champs, et chaque table de données de champs contient, pour chaque élément de données mémorisé dans la table de données de champs, une référence d'élément de données ; et
(e) il existe une table de références d'enregistrements (28) pour chaque table de références d'enregistrements identifiée dans la table de déclarations d'enregistrements, et chaque table de références d'enregistrements contient, pour chaque champ de données associé à cette table de références d'enregistrements dans la table d'enregistrements/champs, des références d'éléments de données correspondant à des éléments de données dans les tables de données de champs.

2. Structure de base de données selon la revendication 1, dans laquelle la table de déclarations de champs (22) comporte de plus, pour chaque nom de champ de données, une indication de type de données.

3. Structure de base de données selon la revendication 1 ou 2, dans laquelle la table d'enregistrements/champs (26) contient des paires associées de première et deuxième identifications uniques.

4. Procédé de mémorisation d'un élément de données dans une base de données, la base de données comprenant :
(a) une table de déclarations de champs (22) qui définit des champs de données admissibles et contient une pluralité de noms de champs de données et le nom d'une table de données de champs pour chaque nom de champ de données, et une première identification unique pour chaque nom de champ de données ;
(b) une table de déclarations d'enregistrements (24) qui définit des types d'enregistrements admissibles et contient le nom d'une pluralité d'enregistrements de données et le nom d' une table de références d'enregistrements pour chaque type d' enregistrement, et une deuxième identification unique pour chaque type d'enregistrement ;
(c) une table d'enregistrements/champs (26) qui contient des première et deuxième identifications uniques associées de manière à définir quelle table de références d'enregistrements et donc quel type d'enregistrement contient quels champs de données ;
(d) une table de données de champs (30) pour chaque nom de champ de données identifié dans la table de déclarations de champs, et chaque table de données de champs contient, pour chaque élément de données mémorisé dans la table de données de champs, une référence d'élément de données ; et
(e) une table de références d'enregistrements (28) pour chaque table de références d'enregistrements identifiée dans la table de déclarations d'enregistrements, et chaque table de références d'enregistrements contient, pour chaque champ de données associé à cette table de références d'enregistrements dans la table d'enregistrements/champs, des références d'éléments de données correspondant à des éléments de données mémorisés dans les tables de données de champs ; et le procédé comprenant les étapes de :
réception d'un élément de données et d'un nom générique pour l'élément de données à mémoriser ;
exploration de la base de données afin de déterminer si un enregistrement de déclaration de champ correspondant au nom générique de l'élément de données existe ;
si un tel enregistrement de déclaration de champ existe, exploration de la table de données de champs afin de trouver l'élément de données ; et
mémorisation de l'élément de données.

5. Procédé selon la revendication 4, dans lequel si l'élément de données n'est pas trouvé dans la table de données de champs, le procédé comprend en outre l'étape d'écriture de l'élément de données dans la table de données de champs.

6. Procédé selon la revendication 4 ou 5, dans lequel si un enregistrement de déclaration de champ n'est pas trouvé, le procédé comprend en outre l'étape de création d'une table de données de champs et d'un enregistrement de déclaration de champ pour celle-ci.

7. Procédé selon la revendication 4, 5 ou 6 pour mémoriser une liste d'éléments de données, dans lequel la table de données de champs est explorée pour chaque élément dans la liste.

8. Procédé de recouvrement d'une liste d'éléments de données depuis une base de données, la base de données comprenant :
(a) une table de déclarations de champs (22) qui définit des champs de données admissibles et contient une pluralité de noms de champs de données et le nom d'une table de données de champs pour chaque nom de champ de données, et une première identification unique pour chaque nom de champ de données ;
(b) une table de déclarations d'enregistrements (24) qui définit des types d'enregistrements admissibles et contient le nom d'une pluralité d'enregistrements de données et le nom d'une table de références d'enregistrements pour chaque type d'enregistrement, et une deuxième identification unique pour chaque type d'enregistrement ;
(c) une table d'enregistrements/champs (26) qui contient des première et deuxième identifications uniques associées de manière à définir quelle table de références d'enregistrements et donc quel type d'enregistrement contient quels champs de données ;
(d) une table de données de champs (30) pour chaque nom de champ de données identifié dans la table de déclarations de champs, et chaque table de données de champs contient, pour chaque élément de données mémorisé dans la table de données de champs, une référence d'élément de données ; et
(e) une table de références d'enregistrements (28) pour chaque table de références d'enregistrements identifiée dans la table de déclarations d'enregistrements, et chaque table de références d'enregistrements contient, pour chaque champ de données associé à cette table de références d'enregistrements dans la table d'enregistrements/champs, des références d'éléments de données correspondant à des éléments de données mémorisés dans les tables de données de champs ; et le procédé comprenant les étapes de :
réception d'un nom pour les éléments de données à recouvrer ;
exploration de la base de données afin de déterminer si un enregistrement de déclaration de champ correspondant au nom des éléments de données existe :
si un tel enregistrement de déclaration de champ existe, lecture de la table de déclarations de champs afin de trouver la table de données de champs ; et
ouverture de la table de données de champs ; et
recouvrement des éléments de données à partir de la table de données de champs.

9. Procédé de mémorisation d'un enregistrement de données dans une base de données, la base de données comprenant :
(a) une table de déclarations de champs (22) qui définit des champs de données admissibles et contient une pluralité de noms de champs de données et le nom d'une table de données de champs pour chaque nom de champ de données, et une première identification unique pour chaque nom de champ de données ;
(b) une table de déclarations d'enregistrements (24) qui définit des types d'enregistrements admissibles et contient le nom d'une pluralité d'enregistrements de données et le nom d'une table de références d'enregistrements pour chaque type d'enregistrement, et une deuxième identification unique pour chaque type d'enregistrement ;
(c) une table d'enregistrements/champs (26) qui contient des première et deuxième identifications uniques associées de manière à définir quelle table de références d'enregistrements et donc quel type d'enregistrement contient quels champs de données ;
(d) une table de données de champs (30) pour chaque nom de champ de données identifié dans la table de déclarations de champs, et chaque table de données de champs contient, pour chaque élément de données mémorisé dans la table de données de champs, une référence d'élément de données ; et
(e) une table de références d'enregistrements (28) pour chaque table de références d'enregistrements identifiée dans la table de déclarations d'enregistrements, et chaque table de références d'enregistrements contient, pour chaque champ de données associé à cette table de références d'enregistrements dans la table d'enregistrements/champs, des références d'éléments de données correspondant à des éléments de données mémorisés dans les tables de données de champs ; et le procédé comprenant les étapes de :
réception d'un enregistrement de données contenant un nom générique et une liste de noms de champs et d'éléments de données ;
exploration de la base de données afin de déterminer si un enregistrement de déclaration d'enregistrement existe pour l'enregistrement ;
si un tel enregistrement de déclaration d'enregistrement existe, pour chaque nom de champ exploration de la table d'enregistrements/champs afin de trouver les champs associés à l'enregistrement de données ; et
mémorisation de l'enregistrement de données dans les tables de données de champs correspondant aux champs trouvés, et mémorisation des références d'éléments de données correspondant aux éléments de données mémorisés dans la table de références d'enregistrements identifiée dans l'enregistrement de déclaration d'enregistrement existant.

10. Procédé de recouvrement d'une liste d'enregistrements de données depuis une base de données, la base de données comprenant :
(a) une table de déclarations de champs (22) qui définit des champs de données admissibles et contient une pluralité de noms de champs de données et le nom d'une table de données de champs pour chaque nom de champ de données, et une première identification unique pour chaque nom de champ de données ;
(b) une table de déclarations d'enregistrements (24) qui définit des types d'enregistrements admissibles et contient le nom d'une pluralité d'enregistrements de données et le nom d' une table de références d'enregistrements pour chaque type d' enregistrement, et une deuxième identification unique pour chaque type d'enregistrement ;
(c) une table d'enregistrements/champs (26) qui contient des première et deuxième identifications uniques associées de manière à définir quelle table de références d'enregistrements et donc quel type d'enregistrement contient quels champs de données ;
(d) une table de données de champs (30) pour chaque nom de champ de données identifié dans la table de déclarations de champs, et chaque table de données de champs contient, pour chaque élément de données mémorisé dans la table de données de champs, une référence d'élément de données ; et
(e) une table de références d'enregistrements (28) pour chaque table de références d'enregistrements identifiée dans la table de déclarations d'enregistrements, et chaque table de références d'enregistrements contient, pour chaque champ de données associé à cette table de références d'enregistrements dans la table d'enregistrements/champs, des références d'éléments de données correspondant à des éléments de données mémorisés dans les tables de données de champs ; et le procédé comprenant les étapes de :
réception d'un nom pour les enregistrements de données à recouvrer ;
exploration de la base de données afin de déterminer si un enregistrement de déclaration d'enregistrement correspondant au nom existe ;
si un tel enregistrement de déclaration d'enregistrement existe, lecture de la table de déclarations de champs afin de trouver la table de références d'enregistrements ; et
ouverture de la table de références d'enregistrements ; et
recouvrement des enregistrements de données.

11. Produit de programme informatique chargeable directement dans la mémoire interne d'un ordinateur numérique, et comprenant des parties de code logiciel pour exécuter les étapes de la revendication 4 quand le produit est exécuté sur un ordinateur.

12. Produit de programme informatique chargeable directement dans la mémoire interne d'un ordinateur numérique, et comprenant des parties de code logiciel pour exécuter les étapes de la revendication 8 quand le produit est exécuté sur un ordinateur.

13. Produit de programme informatique chargeable directement dans la mémoire interne d'un ordinateur numérique, et comprenant des parties de code logiciel pour exécuter les étapes de la revendication 9 quand le produit est exécuté sur un ordinateur.

14. Produit de programme informatique chargeable directement dans la mémoire interne d'un ordinateur numérique, et comprenant des parties de code logiciel pour exécuter les étapes de la revendication 10 quand le produit est exécuté sur un ordinateur.

15. Produit de programme informatique chargeable directement dans la mémoire interne d'un ordinateur numérique, et comprenant des parties de code logiciel pour définir une structure de base de données conformément à la revendication 1 quand le produit est exécuté sur un ordinateur.
